Europäisches Patentamt

European Patent Office

Office européen des brevets

(19)

(11) Veröffentlichungsnummer: **0 334 874 B1**

# (12) EUROPÄISCHE PATENTSCHRIFT

(45) Veröffentlichungstag der Patentschrift:
24.07.91 Patentblatt 91/30

(51) Int. Cl.⁵: **B29B 7/60**

(21) Anmeldenummer: 87907927.5

(22) Anmeldetag: 01.12.87

(86) Internationale Anmeldenummer:
PCT/DE87/00563

(87) Internationale Veröffentlichungsnummer:
WO 88/04225 16.06.88 Gazette 88/13

(54) **VORRICHTUNG ZUM DOSIEREN MINDESTENS ZWEIER FLIESSFÄHIGER REAKTIONSKOMPONENTEN IN EINE MISCHKAMMER.**

(30) Priorität: 01.12.86 DE 3640980
04.04.87 PCT/DE87/00149

(43) Veröffentlichungstag der Anmeldung:
04.10.89 Patentblatt 89/40

(45) Bekanntmachung des Hinweises auf die
Patenterteilung:
24.07.91 Patentblatt 91/30

(84) Benannte Vertragsstaaten:
AT BE CH DE FR GB IT LI LU NL SE

(56) Entgegenhaltungen:
DE-A- 3 128 666
US-A- 3 912 234
US-A- 4 132 483

(73) Patentinhaber: MEINZ, Hans Willi
Kockerellstrasse 19
W-5100 Aachen (DE)

(72) Erfinder: MEINZ, Hans Willi
Kockerellstrasse 19
W-5100 Aachen (DE)

(74) Vertreter: König, Werner, Dipl.-Ing.
Habsburgerallee 23-25
W-5100 Aachen (DE)

EP 0 334 874 B1

## Beschreibung

Die Erfindung betrifft eine Vorrichtung zum Dosieren mindestens zweier fließfähiger Reaktionskomponenten in eine Mischkammer, mit mindestens einem Behälterraum für jede Komponente, mit je einem Verdrängerelement in jedem Behälterraum, wobei in allen Behälterräumen mindestens einer Komponente das Verdrängerelement flexibel ausgebildet ist, das den dazugehörigen Behälterraum in einen Komponentenraum und in einen Hydraulikraum unterteilt und das den Komponentenraum hermetisch dicht vom Hydraulikraum abtrennt, mit einer von einem Komponenten-Vorratsbehälter in den Komponentenraum/die Komponentenräume führenden Zuleitung je Komponente, mit einer vom Komponentenraum/von den Komponentenräumen zur Mischkammer führenden Ableitung je Komponente.

Aus der US-A-4,132,483 ist eine derartige Vorrichtung bekannt. Diese bekannte Vorrichtung besteht aus jeweils einem Behälterraum mit einem Faltenbalg für jede Komponente, wobei sich in dem mit Hydraulikflüssigkeit gefüllten Hydraulikraum jeweils ein Plungerkolben befindet, der über eine dynamische Dichtung zur Umgebung hin abgedichtet ist und wobei die beiden Plungerkolben über ein gemeinsames, drehbares Joch mechanisch angetrieben werden.

Diese bekannte Vorrichtung läßt eine frei wählbare Veränderung des Dosierverhältnisses während des Dosiervorganges nicht zu. Es sind zwar Vorrichtungen mit mechanisch gekoppeltem Antrieb bekannt, die auch während des Dosierhubes eine Änderung des Dosierverhältnisses erlauben, jedoch ist diese mechanische Verstellung des Dosierverhältnisses sehr träge und mit einem großen Fehler behaftet. Bei größeren Dosierbehältern und bei der Hochdruckdosierung von Mehrkomponentensystemen werden die mechanisch zu übertragenden Kräfte sehr groß, so daß der bauliche Aufwand entsprechend zunimmt. Ein weiterer Nachteil liegt in der Lageveränderung der einzelnen Behälterräume zueinander, die eine starre Koppelung der Behältergehäuse nicht zuläßt. Eine starre Verrohrung der Dosierbehälter ist jedoch bei Hochdruckanlagen sowohl aus technischen, wirtschaftlichen als auch aus Sicherheitsgründen unerläßlich. Die dynamische Dichtung an den Plungerkolben weist zudem, insbesondere bei größeren Durchmessern und höheren Drücken, erhebliche Reibung und ein zusätzliches Leckage-Risiko auf. Leckverluste, die auch bei einwandfreier dynamischer Dichtung unvermeidlich auftreten, verschieben den Hubbereich der Faltenbälge fortschreitend, was zur Zerstörung der Faltenbälge führt, falls die Leckverluste nicht ständig überprüft und durch eine Leckergänzungseinrichtung wieder dem Hydraulikraum zugeführt werden, damit das im Hydraulikraum eingeschlossene Flüssigkeitsvolumen immer konstant bleibt.

Die Forderung der kunststoffverarbeitenden Industrie nach Minimierung der Herstellkosten und ein immer höheres Qualitätsniveau der Produkte machten den Einsatz geeigneter Steuerungs-, Regelungs- und Überwachungssysteme zwingend notwendig. Die Entwicklung der Mikroprozessortechnik und geeigneter Meßwertaufnehmer hat hier wesentliche Voraussetzungen für eine exakte Einhub-Kolbendosierung geschaffen. Solche Dosieranlagen werden beispielsweise in der EP-A-0 003 563, US-A-3,908,862 und US-A-4,008,829 beschrieben.

Nachteilig bei diesen Einhub-Kolbendosieranlagen ist, daß die Plungerkolbenpumpen dynamische Dichtungen aufweisen, die insbesondere bei der Verarbeitung abrasiver und/oder korrosiver Komponenten zu fortschreitendem Pumpenverschleiß und damit zu unkontrollierter Leckage und schließlich zum Ausfall führen. Dadurch bedingt sind Produktionsunterbrechungen und hoher Wartungsaufwand, in Abhängigkeit von der Beschaffenheit der Komponenten, alle drei bis sechs Monate im 24-Stunden-Betrieb notwendig.

Die Aufgabe der vorliegenden Erfindung besteht nun darin, eine Vorrichtung zum Dosieren von mindestens zwei fließfähigen Reaktionskomponenten so auszubilden, daß sowohl eine leckage-, reibungs- und veschleißfreie Dosierung abrasivster und/oder korrosivster Komponenten als auch eine exakte durch Mikroprozessoren vorwähl- und steuerbare volumetrische Hydraulikstromregelung der einzelnen Komponenten ermöglicht wird.

Diese Aufgabe wird bei einer Vorrichtung der eingangs erwähnten Art erfindungsgemäß dadurch gelöst, daß bei mindestens einer Komponente der Hydraulikraum/die Hydraulikräume eine von einer Druckquelle ausgehende Zuleitung aufweist/aufweisen und eine vom Hydraulikraum/von den Hydraulikräumen zu einem Tank führende Ableitung vorgesehen ist und daß je Komponente eine Steuer-Regeleinrichtung vorgesehen ist, die einen in seiner Größe und Zeitdauer vorwählbaren Hydraulikstrom bestimmt, der das Verdrängerelement/die Verdrängerelemente hydraulisch antreibt.

Die Vorrichtung der vorgenannten Art führt zwei oder mehrere Reaktionskomponenten, beispielsweise Polyol und Isocyanat zur Bildung von Polyurethan, im richtigen Mischungsverhältnis, meistens unter hohem Druck und mit möglichst geringer Toleranz, in einer Mischkammr zusammen, wo eine chemische Reaktion einsetzt. Die Hochdruckvermischung findet dabei im Millisekundenbereich statt, wobei die Dosierdrücke bis zu 250 bar und vereinzelt auch darüber betragen. Die Qualität der hergestellten Kunststoffteile ist in erster Linie abhängig von dem exakt eingehaltenen Mischungsverhältnis von Schußanfang bis Schußende sowie von der einwandfreien Vermischung bei ungestörtem Schußanfang und Schußende. Insbesondere die Massenströme

2

müssen bei der Vermischung wegen der Stöchiometrie der chemischen Reaktion und wegen der reproduzierbaren Formteilgewichte konstant gehalten werden.

Die erfindungagemäße Vorrichtung weist je Komponente entweder einen oder zwei Verdrängerelemente auf, wobei mindestens eine Komponente mit entweder einem oder zwei flexiblen Verdrängerelementen dosiert wird und die übrigen Komponenten mit starren Verdrängerelementen, wie z.B. Plungerkolben, gefördert werden können. Vorteilhafterweise wird man jedoch alle Verdrängerelemente als flexible Verdrängerelemente ausbilden, da sie aufgrund ihrer Reibungs- und Verschleißfreiheit in den meisten Fällen wesentlich langlebigere Konstruktionen ermöglichen als herkömmliche Kolben. Die Einsatzbereitschaft bzw. die Lebensdauer der Vorrichtung wird weder durch Korrosion, Abrasion oder Ablagerungen beeinfrächtigt. Im Gegensatz zu den bekannten Vorrichtungen werden die in der erfindungsgemäßen Vorrichtung vorgeschlagenen flexiblen Verdrängerelemente nicht mit konstanter Vorschubgeschwindigkeit, sondern mit einem konstanten Volumenstrom angetrieben. Die flexiblen Verdrängerelemente stehen somit für eine Regelung der den Dosierstrom bestimmenden Vorschubgeschwindigkeit nicht zur Verfügung. Da das Hub-Durchmesser-Verhältnis der flexiblen Verdrängerelemente im Vergleich zu Plungerkolben klein ist, sind entsprechend große Durchmesser auszuführen, was aufgrund der fehlenden Kolbenreibung möglich ist und zu sehr kompakten Dosierbehältern mit einem Durchmesser-Höhen-Verhältnis von etwa 1 : 1 führt. Wegen der Reibungsfreiheit der flexiblen Verdrängerelemente können somit auch kleinste Dosiermengen mit dem größten Dosierbehälter genau dosiert werden, vorausgesetzt, daß die elektrische Steuerung bzw. Regelung des veränderbaren Hydraulikstromes dafür ausgelegt ist. Ein weiterer Vorteil der erfindungsgemäßen Vorrichtung besteht darin, daß die flexiblen Verdrängerelemente immer nur durch einen extrem niedrigen Differenzdruck beaufschlagt sind. Dies ermöglicht z.B. die Verwendung von dünnwandigen flexiblen Verdrängerelementen aus Stahl oder Kunststoff mit geringer Biegesteifigkeit und einer daraus resultierenden großen Lebensdauer.

Die erfindungsgemäße Vorrichtung kann ferner so ausgebildet sein, daß für die flexiblen Verdrängerelemente jweils ein Endlagen-Sensor vorgesehen ist, der mit der Steuer-Regeleinrichtung zusammenarbeitet. Bei Verwendung der meisten flexiblen Verdrängerelemente dürfen die Hubendlagen auf keinen Fall überschritten werden, um die flexiblen Verdrängerelemente nicht zu zerstören. Die Endlagen-Erfassung kann dabei wahleise durch unterschiedliche marktübliche elektrische Sensoren erfolgen, die es in den meisten Fällen auch in gekapselten hochdruckfesten Ausführungen gibt. Diese Sensoren können entweder zur kontinuierlichen Positionierung und Überwachung der elastischen Verdrängerelemente über den gesamten Hub oder auch nur als reine Endabschalter ausgebildet sein. Sobald vom Sensor ein entsprechendes elektrisches Signal erfolgt, wird der von der Steuer-Regeleinrichtung bestimmte Hydraulikstrom gestoppt und/oder gesteuerte Ventile sperren den Hydraulik-bzw. Komponentenstrom und verhindern damit einen unzulässigen Anstieg des Differenzdruckes zwischen Hydraulik- und Komponentenraum.

Die erfindungsgemäße Vorrichtung kann ferner so ausgebildet sein, daß der Endlagen-Sensor ein elektrischer berührunsloser Näherungsschalter ist. Auf einfache Art und Weise können so die zulässigen Hubendlagen erfaßt und mittels eines elektrischen Ausgangssignals ausgewertet werden. Diese Anordnung ermöglicht allerdings nur die Erfassung der beiden extremen Auslenkungen des flexiblen Verdrängerelements.

Die erfindungsgemäße Vorrichtung kann ferner so ausgebildet sein, daß der Endlagen-Sensor ein elektrischer Wegaufnehmer ist, der mit dem flexiblen Verdrängerelement auf der Hydraulikraumseite verbunden ist. Diese Anordnung bietet die Möglichkeit der kontinuierlichen Meßwerterfassung über den gesamten Hub des flexiblen Verdrängerelementes und kann daher sowohl zur Positionserfassung, Hubendabschaltung als auch zur zusätzlichen Überwachung des Dosiervorganges herangezogen werden.

Die erfindungagemäße Vorrichtung kann ferner so ausgebildet sein, daß das flexible Verdrängerelement ein Faltenbalg aus Metall oder Kunststoff ist. Faltenbälge zeichnen sich dadurch aus, daß sie ein besonders großes Verdrängungsvolumen bei geringem Eigenwiderstand ermöglichen. Faltenbälge aus austenitischem Edelstahl sind besonders bei abrasiven Komponenten den Faltenbälgen aus Kunststoff überlegen. Ein weiterer Vorteil der Faltenbälge aus Stahl besteht darin, daß sie sowohl am Flansch als auch am Boden geschweißt werden können, was eine optimale Abdichtung zwischen Komponenten-und Hydraulikraum gewährleistet. Für die Lebensdauer aller Faltenbälge ist von besonderer Bedeutung, daß die Beschleunigungen der Falenbalgböden einen für jeden Faltenbalg charakteristischen Wert nicht übersteigen dürfen. Im Rahmen der elektrischen Steuer-Regeleinrichtung bietet sich hierfür der Einsatz eines Rampenbildners an, der den Sollwert des Hydraulikstromes während einer fest eingestellten Rampenzeit von Null auf den als Endwert eingestellten Sollwert ändert. Beim Bremsvorgang erfolgt die Sollwertänderung sinngemäß umgekehrt. Auch die Hydraulik-bzw. Komponentenventile sollten in ihrer Schaltdauer einstellbar sein, damit die für jeden Faltenbalg zulässigen Beschleunigungen gewählt werden können.

Die erfindungagemäße Vorrichtung kann ferner so ausgebildet sein, daß das flexible Verdrängerelement eine Membran ist.

Diese Ausbildung, etwa in Form einer großvolumigen Kalottenmembran, zeichnet sich durch einen konkurrenzlos niedrigen Preis im Vergleich zu den vorgenannten Faltenbälgen aus Stahl oder Kunststoff aus. Nachteilig bei allen Membranen, die ein relativ großes Verdrängungsvolumen in Abhängigkeit von ihrem Durchmesser realisieren können, ist die eingeschränkte Chemikalienbeständigkeit der gummielastischen Membranwerkstoffe.

Die erfindungsgemäße Vorrichtung kann ferner so ausgebildet sein, daß die Membran aus einem PTFE-beschichteten gummielastischen Material besteht. Durch die Beschichtung der gummielastischen Trägermembranen mit PTFE ist eine gute chemische Beständigkeit gegen alle in der Praxis vorkommenden Reaktionskomponenten gegeben. Nachteilig ist jedoch der kleinere Hub im Verhältnis zur Größe des Wirkdurchmessers der Membran, was einer Vergrößerung des Behälterraums bei gleicher Funktion entspricht.

Die erfindungsgemäße Vorrichtung kann ferner so ausgebildet sein, daß in dem Behälterraum/den Behälterräumen mindestens einer Komponente das Verdrängerelement starr ausgebildet ist. Es kann, insbesondere bei Mehrkomponentensystemen, aus wirtschaftlichen Gründen sinnvoll sein, die Komponten, die aus einer unproblematischen gut schmierfähigen Flüssigkeit bestehen, mit starren Verdrängerelementen, z.B. Hubverdrängerkolben, zu dosieren und alle problematischen Komponenten mit flexiblen Verdrängerelementen, z.B. Faltenbälgen, zu fördern.

Die erfindungagemäße Vorrichtung kann ferner so ausgebildet sein, daß das flexible Verdrängerelement aus mindestens zwei aufeinanderliegenden Trennwänden besteht. Eine doppel- bzw. mehrwandige Ausführung des flexiblen Verdrängerelementes ermöglicht eine große Elastizität bei gleichzeitig geringer Biegesteifigkeit, was eine größeres nutzbares Verdrängungsvolumen zur Folge hat. Ein weiterer Vorteil des mehrwandigen flexiblen Verdrängerelementes ist die größere Sicherheit beim Undichtwerden. In der Regel werden nicht alle Trennwände des Verdrängerelementes gleichzeitig undicht werden, sondern die Undichtheit wird von einer äußeren Trennwand ihren Anfang nehmen, so daß die Möglichkeit einer Leckage-Meldung besteht, bevor das gesamte flexible Verdrängerelement undicht wird.

Die erfindungsgemäße Vorrichtung kann ferner so ausgebildet sein, daß sich zwischen den Trennwänden jeweils ein Flüssigkeitsfilm befindet und daß der Zwischenraum bzw. die Zwischenräume zwischen den Trennwänden mit der Umgebung außerhalb des Behälterraums in Verbindung steht. Diese Ausführung sieht ein einfaches Leckage-Meldesystem vor, indem zwischen die Trennwände eine mit den Komponenten verträgliche Flüssigkeit eingebracht wird, die sich als dünner Schmierfilm zwischen die Trennwände legt. Der sich zwischen den Trennwänden befindliche Zwischenraum steht mit der Umgebung außerhalb des Behälterraums in Verbindung, wo sich ein Leckage-Melder befindet, der im Falle eines Bruches einer Trennwand ein Signal auslöst.

Die erfindungagemäße Vorrichtung kann ferner so ausgebildet sein, daß die Steuer-Regeleinrichtung in die von der Druckquelle zum Hydraulikraum führende Zuleitung mit einem geschlossenen Regelkreis eingebaut ist. Entscheidend für die Dosierqualität der flexiblen Verdrängerelemente ist die Konstanz des zum Hydraulikraum fließenden Hydrauliktromes, was nach dem vorgenannten Vorschlag durch eine Hydraulikstromregelung mit einem geschlossenen Regelkreis erfolgen kann. Die Problematik bei Einhub-Dosieranlagen liegt darin, daß die Hydraulikstromregelung während kurzer Dosierschüsse (etwa 1 bis 3 Sekunden) und Volumenströmen bis etwa 10 Liter pro Sekunde bei hochwertigen Dosieranlagen im Millisekundenbereich erfolgen muß.

Die erfindungsgemäße Vorrichtung kann ferner so ausgebildet sein, daß die Steuer-Regeleinrichtung ein elektrohydraulischer Verstärker ist, wobei die Istwerterfassung des Hydraulikstromes jeweils durch ein Durchflußmeßgerät erfolgt, das eine rotierende Meßwelle aufweist, die mit einem Kopier-Steuerventil mechanisch gekoppelt ist, welches mit einem elektrischen Steuermotor verbunden ist, wobei die rotative Vorgabebewegung des Steuermotors (= Sollwert) mit Hilfe des Kopier-Steuerventils in eine rotative Ausgangsbewegung der Meßwelle (= Istwert) drehwinkelgetreu kopiert wird und wobei der Schluckstrom des Durchflußmeßgerätes (= gemessener Hydraulikstrom) in direktem Verhältnis zu der vom Durchflußmeßgerät erzeugten Drehbewegung steht.

Bei dem vorgenannten Vorschlag nach der Erfindung dient zum Messen und Regeln des vorwählbaren Hydraulikstromes ein elektrohydraulischer Verstärker, der aus einem Durchflußmeßgerät, einem Kopier-Steuerventil und einem Steuermotor, z.B. einem Schrittmotor, besteht. Dem Steuermotor wird dabei eine vorwählbare rotative Vorgabebewegung (= Sollwert) aufgeprägt, die mit Hilfe des Kopier-Steuerventils, das jegliche nichtsynchrone Bewegung zwischen dem Steuer- und dem Durchflußmeßgerät mittels eines den Volumenstrom drosselnden Steuerschiebers korrigiert, in eine rotative Ausgangsbewegung des Durchflußmeßgerätes (= Istwert) drehwinkelgetreu kopiert wird und wobei der Schluckstrom des Durchflußmeßgerätes (= gemessener Volumenstrom) in direktem Verhältnis zu der vom Durchflußmeßgerät erzeugten Bewegung steht. Das Durchflußmeßgerät dient also nicht nur zur kontinuierlichen Istwerterfassung, sondern auch zur dynamischen Korrektur des im Kopier-Steuerventil integrierten hydromechanischen Regelkreises, indem die Meßwelle über eine Spindel-Mutter-Vebindung bei einer Soll-Istwert- Differenz den Istwert durch mechanisches Verstellen des im Kopier-Steuerventil befindlichen Steuerschiebers an den Sollwert angleicht. Im Gegensatz zu elektrischen Istwertaufnehmern erfolgt die Istwerterfassung, der Soll-Istwert-Vergleich sowie die Sollwertangleichung gleichzeitig, so daß die bei elektrischen Regelkreisen üblichen Regelschwingungen nicht auftreten, die bei Druck-bzw. Lastschwankungen im System zu einem kurzzeitig über-bzw. untersteuerten Volumenstrom führen.

Die erfindungsgemäße Vorrichtung kann ferner so ausgebildet sein, daß das Durchflußmeßgerät ein hydraulischer Hubverdrängermotor ist, der keine mechanische Leistung nach außen abgibt und dessen Ausgangsdruck, entsprechend seinen hydromechanischen Verlusten, geringfügig niedriger als der Eingangsdruck ist, daß der Triebwerksraum des Hubverdrängermotors ständig mit seinem Ausgang verbunden ist und daß der Hubverdrängermotor eine rotierende Motorwelle hat, die als Meßwelle ausgebildet ist.

Das vorgenannte Durchflußmeßgerät ist für die Hydraulikstromregelung der erfindungsgemäßen Vorrichtung von besonderem Vorteil, weil bei ihm die inneren Leckagen auf ein unschädliches Maß reduziert sind. Es eignet sich zur kontinuierlichen Durchflußmessung, wobei auch große und schnelle Druckschwankungen verarbeitet werden können. Weitere Vorteile sind eine sehr gute reproduzierbare Meßgenauigkeit (Meßfehler < 0,1%), sehr großer Meßbereich (etwa 1 : 1000) sowie ein sehr großer Druckbereich (bis etwa 1000 barg. Aufgrund der sehr kleinen Druckdifferenzen zwischen Ein- und Ausgang des Hydraulikmotors ist die Belastung sämtlicher Triebwerksteile sehr gering, was der Lebensdauer (geringe Reibung), insbesondere bei hohen Drücken und Drehzahlen, zugute kommt. Neben den technischen Vorteilen weist dieses Durchflußmeßgerät den großen Vorteil auf, daß zu seiner Verwirklichung konventionelle Serienmotoren lediglich modifiziert werden müssen. Die wesentlichen Bauteile können aus der Serienfertigung herausgenommen werden, so daß eine wirtschaftliche Fertigung möglich ist.

Die erfindungsgemäße Vorrichtung kann ferner so ausgebildet sein, daß das Durchflußmeßgerät ein hydraulischer Umlaufverdrängermotor ist, der eine rotierende Motorwelle aufweist, die als Meßwelle ausgebildet ist. Ein derartiges Durchflußmeßgerät ist z.B. der Ringkolbenzähler, der im Mitteldruckbereich Anwendung findet und der aufgrund seiner großen Verbreitung relativ preiswert ist.

Die erfindungsgemäße Vorrichtung kann ferner so ausgebildet sein, daß das Durchflußmeßgerät ein hydraulischer Linearmotor ist, der eine translatorisch bewegte Kolbenstange aufweist, die über eine Spindel-Mutter-Verbindung mit einer rotierenden Meßwelle verbunden ist, die an dem Kopier-Steuerventil mechanisch gekoppelt ist. Solche Durchflußmeßgeräte bieten sich in Verbindung mit einem elektrohydraulischen Verstärker vor allem zur Messung kleiner und mittlerer Hydraulikströme an, wobei auch der Rückhub des Linearmotors, im Gegensatz zu dem bekannten und auch zu Dosierzwecken eingesetzten Linearverstärker, zur Hydraulikstromsteuerung und damit zum Dosieren genutzt werden kann, wenn die rotierende Meßwelle durch eine Wellendichtung zum Kopier-Steuerventil hin abgedichtet ist. Im Gegensatz zu dem bekannten Linearverstärker gibt die Vorrichtung nach der Erfindung keine mechanische Leistung nach außen ab.

Die erfindungsgemäße Vorrichtung kann ferner so ausgebildet sein, daß die Steuer-Regeleinheit eine hydraulische Sekundärregelung ist. Die hydraulische Sekundärregelung besteht im wesentlichen aus einem Hydraulikmotor mit stufenlos verstellbarem Schluckvolumen und angebautem Tachogenerator mit digitaler oder analoger Signalabgabe. Der Hydraulikmotor muß für Motor- wie Pumpenbetrieb gleich gut geeignet sein und das Hubvolumen des Motors muß von Null bis zum Maximum sehr schnell verstellbar sein. Die Drehzahl des Hydraulikmotors wird durch den Tachogenerator erfaßt und mit dem Sollwert verglichen. Die Regelabweichung wird über einen PID-Regler aufbereitet, der mit seinem Stellsignal über einen Servostellzylinder das Schluckvolumen des Hydraulikmotors ändert. Es wird also ähnlich wie beim elektrohydraulischen Verstärker der Schluckstrom eines Hydraulikmotors zur Hydraulikstromregelung genutzt, wobei die Sekundärregelung den Vorteil hat, daß sie ohne Drosselsteuerung auskommt, was sich in der Energiebilanz sehr positiv auswirkt, da herkömmliche Dosieranlagen mit Proportional- oder Servoventilregelung bzw. Linearverstärkerantrieb bis zu 50% der hydraulischen Energie in Wärme umsetzen.

Die erfindungsgemäße Vorrichtung kann ferner so ausgebildet sein, daß die Druckquelle eine Hydraulikpumpe ist, die mit einer Regel-Steuereinheit zusammenarbeitet. Eine solche Ausführung könnte für kleine und kleinste Volumenströme im Nieder- und Mitteldruckbereich Anwendung finden, wobei die Hydraulikpumpe entweder als Konstantpumpe mit verstellbarem Antriebsmotor oder als hydraulische Verstellpumpe ausgebildet sein kann. In beiden Fällen kann über einen geschlossenen Regelkreis der Hydraulikstrom geregelt werden, es kann jedoch auch durch Eigenkonstanz des Pumpenantriebs die jeweils geforderte Genauigkeit erreicht werden, beispielsweise durch einen Schrittmotorantrieb.

Die erfindungsgemäße Vorrichtung kann ferner so ausgebildet sein, daß die Steuer-Regeleinrichtung ein elektrohydraulisches Proportional- bzw. Servoventil ist. Im Gegensatz zum Proportionalventil wird das Servoventil hauptsächlich in elektrohydraulischen Regelkreisen eingesetzt. Die elektrohydraulische Regelung ergibt kleine Regelschwingungen, die im stationären Betrieb unschädlich sind. Bei Lastschwankungen, wie sie in der Polyurethanverarbeitung planmäßig zustande kommen, kann es jedoch zu schädlichen Regelschwingungen kommen. Wegen seiner Preiswürdigkeit könnte diese Ausführung dennoch eine wirtschaftliche Alternative sein.

Die erfindungsgemäße Vorrichtung kann ferner so ausgebildet sein, daß zur Istwerterfassung des Hydraulikstromes ein volumetrisches Durchflußmeßgerät mit elektrischem Ausgangssignal vorgesehen ist. Zur Regelung des Hydraulikstromes durch die Hydraulikpumpe oder die Proportional- bzw. Servoventile ist eine Istwerterfassung im Hydraulik- oder Komponentenstrom notwendig. Im Hydraulikstrom kann dies ein volumetrisches Durchflußmeßgerät sein, das sich in der Zuleitung zwischen Druckquelle und Hydraulikraum befindet und das ständig den Istwert mißt, der als elektrisches Ausgangssignal in eine mit dem Sollwert vergleichbare Größe umgewandelt und mit dem Sollwert verglichen wird. Weichen Soll- und Istwert voneinander ab, so wird aus der Differenz ein Signal gebildet, welches das Servoventil so beeinflußt, daß der Istwert an den Sollwert angeglichen wird. Damit die Regelung schnell ist, müssen pro Zeiteinheit möglichst viele Meßwerte ermittelt und verarbeitet werden.

Die erfindungsgemäße Vorrichtung kann ferner so ausgebildet sein, daß zur Hydraulikstromregelung jeweils zwischen dem Komponentenraum bzw. zwischen den Komponentenräumen und der Mischkammer ein Massendurchflußmeßgerät mit einem elektrischen Ausgangssignal vorgesehen ist, das den Massenstrom der jeweiligen Komponente mißt, und daß das elektrische Ausgangssignal als Istwert für die Hydraulikstromregelung dient. Die Istwerterfassung im Komponentenstrom, wie sie hier vorgeschlagen wird, ist grundsätzlich immer am genauesten, sie scheiterte bei den bekannten Vorrichtungen bisher immer daran, daß die bekannten Durchflußmeßgeräte entweder zu störungsanfällig oder zu ungenau waren. Es sind inzwischen elektronische Massendurchflumeßgeräte im Handel, die ohne bewegte Teile arbeiten und eine sehr gute reproduzierbare Meßgenauigkeit aufweisen. Nachteilig sind noch die langen Meßzeiten, so daß mit ihnen nur eine Regelung bei kontinuierlich austragenden Systemen ohne große Lastschwankungen sinnvoll ist.

Die erfindungsgemäße Vorrichtung kann ferner so ausgebildet sein, daß je Komponente jeweils zwischen dem Komponentenraum bzw. den Komponentenräumen und der Mischkammer ein Massendurchflußmeßgerät mit einem elektrischen Ausgangssignal vorgesehen ist, das den Massenstrom der jeweiligen Komponente mißt und den vorgewählten Sollwert der Hydrauliksteuerung entsprechend korrigiert. Diese Anordnung ist eine Kombination aus exakter Massenstromerfassung im Komponentenstrom und schneller Regelung im Hydraulikstrom. Wird im Hydraulikstrom zwischen Druckquelle und Hydraulikraum etwa ein elektrohydraulischer Verstärker mit einem als Hubverdrängermotor ausgebildetem Durchflußmeßgerät und im Komponentenstrom das Massendurchflußmeßgerät nach obigem Vorschlag eingesetzt, so werden sämtliche dynamischen Störgrößen, wie Druckschwankungen, durch den elektrohydraulischen Verstärker und sämtliche quasistatischen Störgrößen, wie Dichteschwankungen, durch das Massendurchlußmeßgerät ausgeregelt.

Die erfindungsgemäße Vorrichtung kann ferner so ausgebildet sein, daß je Komponente ein Verdrängerelement vorgesehen ist, das innerhalb eines Dosierhubes die erforderliche Dosiermenge dosieren kann. Analog zu den Einhub-Kolbendosierern dosiert eine solche Vorrichtung die erforderliche Menge einer Reaktionskomponente innerhalb eines einzigen Hubes zum Zwecke der Formteilherstellung. Vielfach wird die Behälterraumgröße auf die Formteilgröße abgestellt, weil bei der Spezialisierung der Dosiervorrichtung auf ein Formteil sich die für seine Qualität optimale Prozeßdatenkombination auswählen läßt. Auch die Reproduzierbarkei aller Daten von Schuß zu Schuß wird bei dieser Kombination erleichtert. Mit Faltenbälgen aus Edelstahl können Schußvolumina von maximal etwa 50 Liter je Komponente realisiert werden. Nicht zuletzt lassen sich mit Hilfe einer Speicherhydraulik, die die hydraulische Energie zum Dosieren zur Verfügung stellt, kostengünstige Hydraulikaggregate erstellen.

Die erfindungsgemäße Vorrichtung kann ferner so ausgebildet sein, daß je Komponente zwei Verdrängerelemente vorgesehen sind, die wechselseitig Dosier- und Füllhub ausführen, daß die Hubgeschwindigkeit beim Füllen größer als beim Dosieren ist und daß in den Hubendlagen kurzzeitig beide Verdrängerelemente gleichzeitig dosieren. Diese Ausführung ermöglicht einen kontinuierlichen Austrag bzw. erhöhte Austragsleistungen mit kleineren Dosiereinheiten. Bei einer Zweikomponenten-Dosiervorrichtung z.B. kann die Dosierung mit vier Faltenbälgen und zwei Hydraulikstromregelungen pulsationsfrei mit beliebigem Schußvolumen, das nur von der Leistungsfähigkeit der Speicherhydraulik abhängig ist, erfolgen. Außerdem wird eine schnellere Schußfolge ohne Füllhub-Totzeit ermöglicht. Durch die fehlende Anfahrreibung der Faltenbälge ergeben sich praktisch keine Druckschwankungen beim Umschalten der Verdrängerelemente einer Komponente. Mit diesem Dosierkonzept ist für eine Zwei- bzw. Mehrkomponenten-Dosiervorrichtung die größtmögliche Universalität gegeben.

Im folgenden Teil der Beschreibung werden zwei Ausführungsbeispiele der erfindungsgemäßen Vorrichtung anhand von Zeichnungen dargestellt und im folgenden näher beschrieben.

Es zeigen :

Fig. 1    eine Vorrichtung mit elektrohydraulischem Verstärker für eine diskontinuierliche Zweikomponenten-Dosierung,

Fig. 2    einen elektrohydraulischen Verstärker nach Fig. 1 mit einem Axialkolbenmotor in Einzelheit,

Fig. 3    eine Vorrichtung mit regelbarer Hydraulikpumpe für eine kontinuierliche Zweikomponeten-Dosierung.

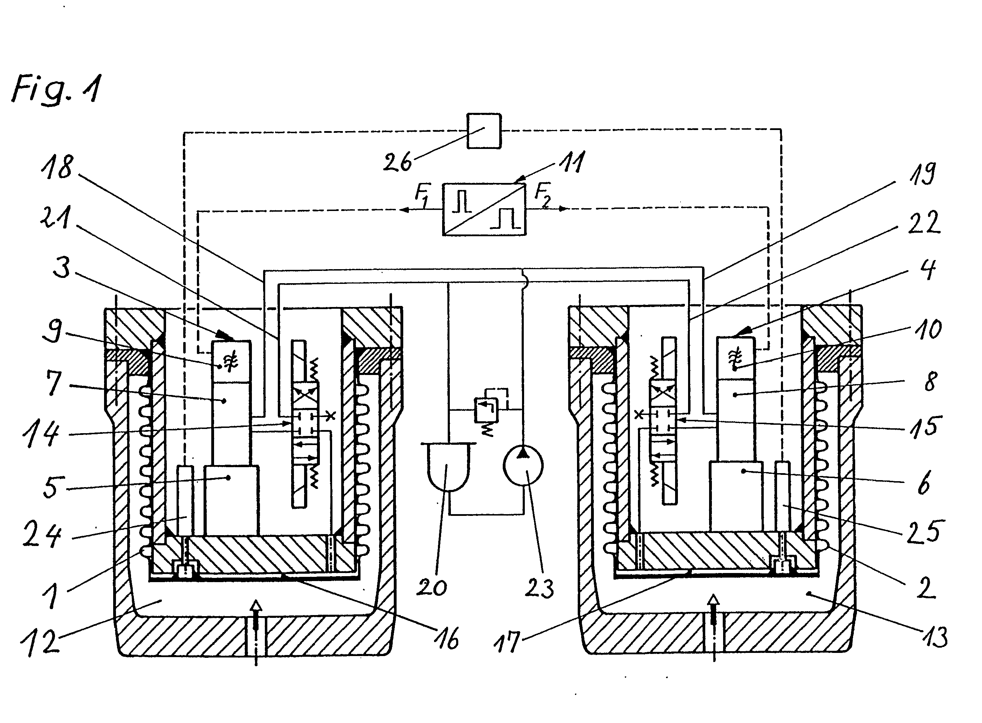

Fig. 1 zeigt ein Ausführungsbeispiel der erfindungsgemäßen Vorrichtung für eine diskontinuierliche Zweikomponenten-Dosierung mit zwei geschweißten Faltenbälgen 1, 2 aus Edelstahl, mit zwei elektrohydraulischen Verstärkern 3, 4, die aus je einem hydraulischen Hubverdrängermotor 5, 6, je einem Kopier-Steuerventil 7, 8 und je einem Schrittmotor 9, 10 bestehen. Mittels einer im Steuerfrequenzgenerator 11 integrierten Impuls-Zähleinrichtung (ohne Abb.) ist der Volumendurchsatz des Hydrulikstromes (= Dosiermenge der Reaktionskomponenten) vor dem Dosierhub digital mit höchster Genauigkeit einstellbar. Das gewünschte volumetrische Dosierverhältnis der beiden in jeweils einem Komponentenraum 12, 13 befindlichen Reaktionskomponenten wird im Steuerfrequenzgenerator 11 durch zwei vorgewählte Steuerfrequenzen F1 und F2 digital festgelegt. Diese beiden Frequenzen werden über Verstärker (ohne Abb.) zwei Schrittmotoren 9, 10 zugeteilt, die diese über zwei Kopier-Steuerventile 7, 8 und zwei Hydraulikmotore 5, 6 schlupffrei in jeweils einen einzeln gemessenen und geregelten Hydraulikstrom umsetzen. Nachdem der Dosierhub beendet ist, werden die beiden Schrittmotoren 9, 10 und die damit gekoppelten Hydraulikmotoren 5, 6 gestoppt. Gleichzeitig schalten zwei 4/3-Wegeventile 14, 15 über ihre Nullstellung in ihre Rücklaufstellung. Das bedeutet, daß die zu jeweils einem Hydraulikraum 16, 17 führenden Zuleitungen 18, 19 gesperrt und die von den Hydraulikräumen 16, 17 zu einem Tank 20 führenden Ableitungen 21, 22 geöffnet werden. Daraufhin führen die mit Vordruck beaufschlagten Reaktionskomponenten, die sich jeweils in den beiden Komponentenräumen 12, 13 befinden, die Faltenbälge 1, 2 in ihre Ausgangsposition zurück, wobei die Hydraulikflüssigkeit, die sich in jeweils einem Hydraulikraum 16, 17 befindet, über die beiden 4/3-Wegeventile 14, 15 wieder in den Tank 20 einer Druckquelle 23 zurückfließt. Damit die Faltenbälge 1, 2 nicht über ihren zulässigen Hub hinausfahren, ist eine Hubendabschaltung erforderlich, die hier mit zwei Wegaufnehmern 24, 25 realisiert ist. Darüberhinaus dienen die beiden Wegaufnehmer 24, 25 zur zusätzlichen Überwachung der Dosiervorrichtung. Eine Auswerte-Elektronik 26 vergleicht ständig die von den beiden Wegaufnehmern 24, 25 gelieferten Meßwerte mit der vorgewählten Anzahl von Impulsen des Steuerfrequenzgenerators 11 und schaltet bei Überschreiten eines definierten Differenzwertes die Anlage wegen Vorliegen eines technischen Defekts ab.

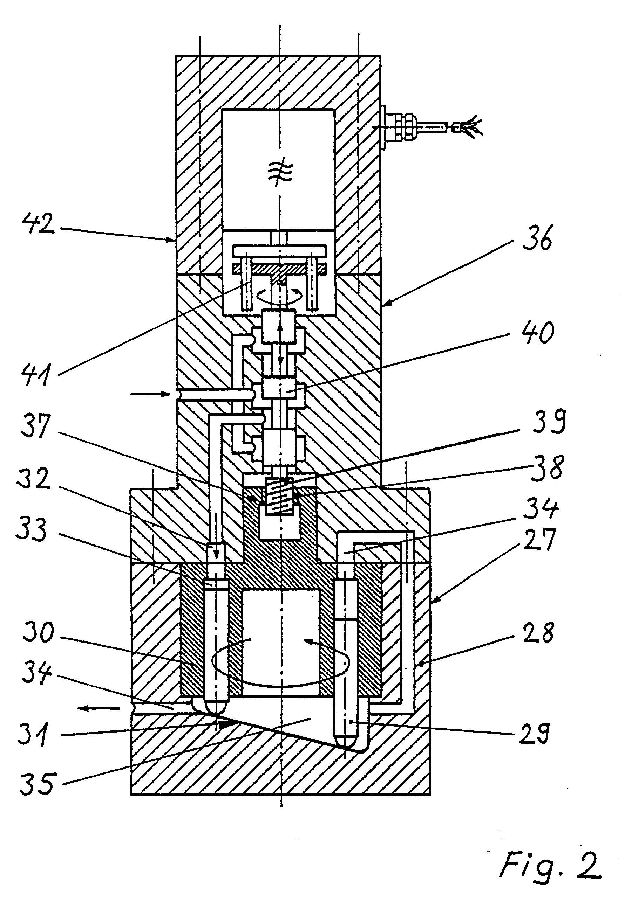

Fig. 2 zeigt den in Fig. 1 dargestellten elektrohydraulischen Verstärker mit einem Axialkolbenmotor 27, der sich in einem druckfesten Gehäuse 28 befindet. Um einen möglichst pulsationsarmen Hydraulikstrom zu erhalten, sind mindestens neun Kolben 29 erforderlich, die in einer Zylindertrommel 30 umlaufen. Die Kolben 29 stützen sich dabei auf der im Gehäuse 28 angebrachten Schräge 31 ab. Die senkrecht zur Achse der Kolben 29 wirkenden Kräfte aller am Eingang 32 angeschlossenen Zylinderräume 33 erzeugen an der Zylindertrommel 30 ein Drehmoment, das immer nur so groß wie das durch die hydromechanischen Verluste verursachte Drehmoment ist. Die aus dem Verlustdrehmoment resultierende Verlustleistung wird in dem Axialkolbenmotor 27 in Wärme umgesetzt. Folglich muß für eine einwandfreie Abführung der Wärme mit der Hydraulikflüssigkeit gesorgt werden, was dadurch geschieht, daß der Ausgang 34 des Axialkolbenmotors 27 durch den Triebwerksraum 35 hindurch nach außen geführt wird. Der Axialkolbenmotor 27 ist dichtend mit einem Kopier-Steuerventil 36 verbunden, wobei eine Meßwelle 37 als Spindelmutter 38 ausgebildet ist, die mit einer Spindel 39 zusammenarbeitet. Die Spindel 39 ist dabei fest mit dem Steuerschieber 40 des Kopier-Steuerventils 36 sowie über eine axiale Ausgleichskupplung 41 mit einem Schrittmotor 42 verbunden. Wird durch den Schrittmotor 42 eine vorgewählte Drehzahl, die einem definierten Hydraulikstrom entspricht, vorgegeben, so schraubt sich beim Start des Schrittmotors 42 die Spindel 39 aus der Spindelmutter 38 heraus und bewirkt eine axiale Auslenkung des Steuerschiebers 40, der daraufhin den Eingang 32 zum Axialkolbenmotor 27 öffnet. Der dadurch ausgelöste Hydraulikstrom treibt den Axialkolbenmotor 27 solange an, bis die Drehzahl des Axialkolbenmotors 27 mit der Drehzahl des Schrittmotors 42 übereinstimmt. Übersteigt die Drehzahl des Axialkolbenmotors 27 die vorgewählte Drehzahl des Schrittmotors 42, so schraubt sich der Steuerschieber 40 des Kopier-Steuerventils 36 wieder in die Mittelstellung und sperrt damit den Eingang 32 zu den Zylinderräumen 33 solange, bis der Schrittmotor 42 und die Zylindertrommel 30 wieder mit gleicher Drehzahl rotieren. Der im Eingang 32 eintretende Hydraulikstrom kann also durch eine vorgewählte Drehzahl des Schrittmotors 42, die einem definierten Hydraulikstrom entspricht, in seiner Größe exakt gemessen und geregelt werden.

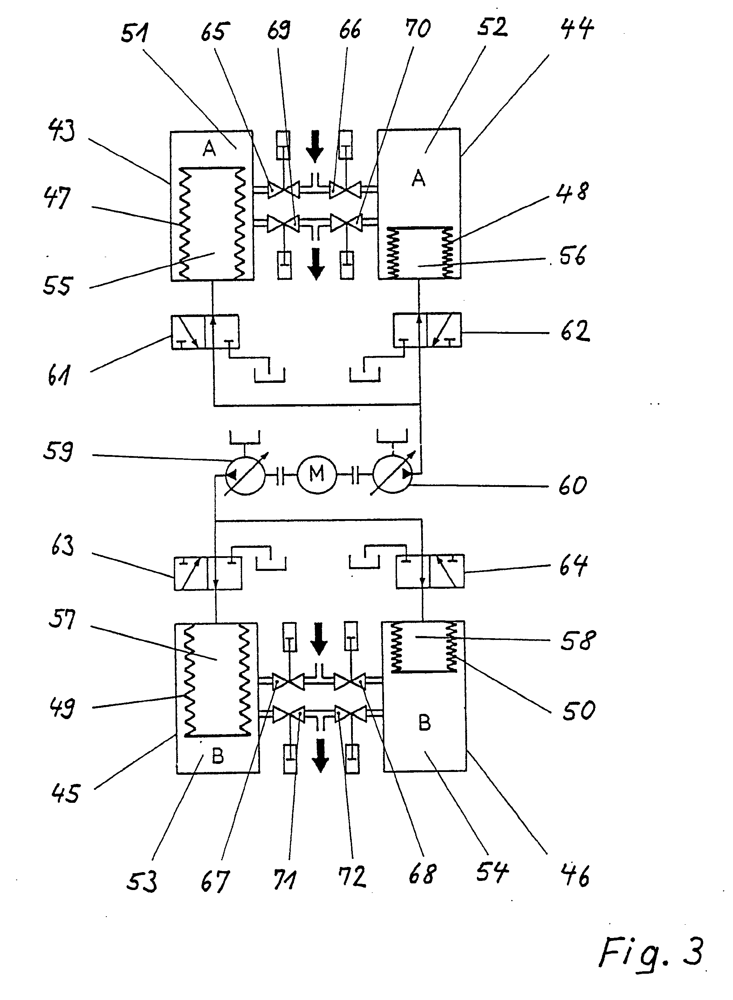

Fig. 3 zeigt ein weiteres Ausführungsbeispiel der Erfindung, in dem die Vorrichtung mit regelbarer Hydraulikpumpe für eine kontinuierliche Zweikomponenten-Faltenbalg-Dosierung ausgebilet ist. Die dargestellte Vorrichtung besteht im wesentlichen aus vier einzeln angeordneten Behälterräumen 43, 44, 45, 46 mit darin befindlichen Faltenbälgen 47, 48, 49, 50, die die Behälterräume 43, 44, 45, 46 in jeweils einen Komponentenraum 51, 52, 53, 54 und in einen Hydraulikraum 55, 56, 57, 58 unterteilen. Die Faltenbälge 47, 48, 49, 50 werden dabei über zwei regelbare Verstellpumpen 59, 60 hydraulisch einzeln angetrieben, wobei das Dosierverhältnis in bekannter Weise eingestellt werden kann. Weiterhin befindet sich zwischen den Hydraulikräumen 55, 56, 57, 58 und den entsprechenden Verstellpumpen 59, 60 jeweils ein 3/3-Wegeventil 61, 62, 63, 64, das jeweils von einer zentralen Steuereinheit (ohne Abb.) geschaltet wird. Weiterhin besitzt die Vorrichtung nach der Erfindung einen druckgasbeladenen Komponenten-Vorratsbehälter (ohne Abb.) für jede Komponente, der jeweils über ein zwangsgesteuertes Absperrventil 65, 66 bzw. 67, 68 mit den Komponentenräumen 51, 52 bzw. 53, 54 verbunden ist, sowie eine Mischkammer (ohne Abb.), die ebenfalls über jeweils ein zwangsgesteuertes Absperrventil 69, 70 bzw. 71, 72 mit den Komponentenräumen 51, 52 bzw. 53, 54 verbunden ist.

Der Dosierhub des ersten Beälterraumpaares 43, 45 erfolgt gleichzeitig mit dem Füllhub des zweiten Zylinderpaares 44, 46. Durch eine größere Hubgeschwindigkeit beim Füllen als beim Dosieren ist ein gleichzeitiges Dosieren beider Behälterräume 43, 44 bzw. 45, 46 einer Komponente in den Hubendlagen möglich, was eine vollkommen pulsationsfreie kontinuierliche Dosierung möglich macht. Die Größe der Faltenbälge 47, 48, 49, 50 wird bei diesem Ausführungsbeispiel im wesentlichen durch die geforderte Austragsleistung sowie durch die Schaltdauer und die zulässige Schalthäufigkeit der zwangsgesteuerten Absperrventile 65, 66, 67, 68 bzw. 69, 70, 71, 72 bestimmt.

## Patentansprüche

1. Vorrichtung zum Dosieren mindestens zweier fließfähiger Reaktionskomponenten in eine Mischkammer, mit mindestens einem Behälterraum für jede Komponente, mit je einem Verdrängerelement (1, 2, 47, 48, 49, 50) in jedem Behälterraum, wobei in allen Behälterräumen mindestens einer Komponente das Verdrängerelement flexibel ausgebildet ist, das den dazugehörigen Behälterraum in einen Komponentenraum (12, 13, 51, 52, 53, 54) und in einen Hydraulikraum (16, 17, 55, 56, 57, 58) unterteilt und das den Komponentenraum hermetisch dicht vom Hydraulikraum abtrennt, mit einer von einem Komponenten-Vorratsbehälter in den Komponentenraum/die Komponentenräume führenden Zuleitung je Komponente, mit einer vom Komponentenraum/von den Komponentenräumen zur Mischkammer führenden Ableitung je Komponente, **dadurch gekennzeichnet**, daß bei mindestens einer Komponente der Hydraulikraum (16 bzw. 17)/die Hydraulikräume (55, 56 bzw. 57, 58) eine von einer Druckquelle (23 ; 59 bzw. 60) ausgehende Zuleitung (18 bzw. 19) aufweist/aufweisen und eine vom Hydraulikraum (16 bzw. 17)/von den Hydraulikräumen (55, 56 bzw. 57, 58) zu einem Tank (20) führende Ableitung (21 bzw. 22) vorgesehen ist und daß je Komponente eine Steuer-Regeleinrichtung (3 bzw. 4) vorgesehen ist, die einen in seiner Größe und Zeitdauer vorwählbaren Hydraulikstrom bestimmt, der das Verdrängerelement (1 bzw. 2)/die Verdrängerelemente (47, 48 bzw. 49, 50) hydraulisch antreibt.

2. Vorrichtung nach Anspruch 1, dadurch gekennzeichnet, daß für die flexiblen Verdrängerelemente (1, 2; 47, 48, 49, 50) jeweils ein Endlagen-Sensor (24, 25) vorgesehen ist, der mit der Steuer-Regeleinrichtung (3, 4) zusammenarbeitet.

3. Vorrichtung nach Anspruch 2, dadurch gekennzeichnet, daß der Endlagen-Sensor (24, 25) ein elektrischer berührungsloser Näherungsschalter ist.

4. Vorrichtung nach Anspruch 2, dadurch gekennzeichnet, daß der Endlagen-Sensor (24, 25) ein elektrischer Wegaufnehmer ist, der mit dem flexiblen Verdrängerelement (1, 2 ; 47, 48, 49, 50) auf der Hydraulikraumseite verbunden ist.

5. Vorrichtung nach einem der Ansprüche 1-4, dadurch gekennzeichnet, daß das flexible Verdrängerelement (1, 2 ; 47, 48, 49, 50) ein Faltenbalg aus Metall oder Kunststoff ist.

6. Vorrichtung nach einem der Ansprüche 1-4, dadurch gekennzeichnet, daß das flexible Verdrängerelement (1, 2 ; 47, 48, 49, 50) eine Membran ist.

7. Vorrichtung nach Anspruch 6, dadurch gekennzeichnet, daß die Membran aus einem PTFE-beschichteten gummielastischen Material besteht.

8. Vorrichtung nach einem der Ansprüche 1-7, dadurch gekennzeichnet, daß in dem Behälterraum/den Behälterräumen (43, 44 bzw. 45, 46) mindestens einer Komponente das Verdrängerelement (1, 2 ; 47, 48, 49, 50) starr ausgebildet ist.

9. Vorrichtung nach einem der Ansprüche 1-8, dadurch gekennzeichnet, daß das flexible Verdrängerelement (1, 2 ; 47, 48, 49, 50) aus mindestens zwei aufeinanderliegenden Trennwänden besteht.

10. Vorrichtung nach Anspruch 9, dadurch gekennzeichnet, daß sich zwischen den Trennwänden jeweils ein Flüssigkeitsfilm befindet und daß der Zwischenraum bzw. die Zwischenräume zwischen den Trennwänden mit der Umgebung außerhalb des Behälterraums (43, 44, 45, 46) in Verbindung steht.

11. Vorrichtung nach einem der Ansprüche 1-10, dadurch gekennzeichnet, daß die Steuer-Regeleinrichtung (3, 4) in die von der Druckquelle (23 ; 59, 60) zum Hydraulikraum (16, 17 ; 55, 56, 57, 58) führende Zuleitung (18, 19) mit einem geschlossenen Regelkreis eingebaut ist.

12. Vorrichtung nach Anspruch 11, dadurch gekennzeichnet, daß die Steuer-Regeleinrichtung (3, 4) ein elektrohydraulischer Verstärker ist, wobei die Istwerterfassung des Hydraulikstromes jeweils durch ein Durchflußmeßgerät (5, 6 ; 27) erfolgt, das eine rotierende Meßwelle (37) aufweist, die mit einem Kopier-Steuerventil (36) mechanisch gekoppelt ist, welches mit einem elektrischen Steuermotor (42) verbunden ist, wobei die rotative Vorgabebewegung des Steuermotors (42) (= Sollwert) mit Hilfe des Kopier-Steuerventils (36) in eine rotative Ausgangsbewegung der Meßwelle (37) (= Istwert) drehwinkelgetreu kopiert wird und wobei der Schluckstrom des Durchflußmeßgerätes (5, 6 ; 27) (= gemessener Hydraulikstrom) in direktem Verhältnis zu der vom Durchflußmeßgerät (5, 6 ; 27) erzeugten Drehbewegung steht.

13. Vorrichtung nach Anspruch 12, dadurch gekennzeichnet, daß das Durchflußmeßgerät (5, 6 ; 27) ein hydraulischer Hubverdrängermotor ist, der keine mechanische Leistung nach außen abgibt und dessen Ausgangsdruck, entsprechend seiner hydromechanischen Verluste, geringfügig niedriger als der Eingangsdruck ist, daß der Triebwerksraum (35) des Hubverdrängermotors ständig mit seinem Ausgang (34) verbunden ist und daß der Hubverdrängermotor eine rotierende Motorwelle hat, die als Meßwelle (37) ausgebildet ist.

14. Vorrichtung nach Anspruch 12, dadurch gekennzeichnet, daß das Durchflußmeßgerät (5, 6 ; 27) ein hydraulischer Umlaufverdrängermotor ist, der eine rotierende Motorwelle aufweist, die als Meßwelle (37) ausgebildet ist.

15. Vorrichtung nach Anspruch 12, dadurch gekennzeichnet, daß das Durchflußmeßgerät (5, 6 ; 27) ein hydraulischer Linearmotor ist, der eine translatorisch bewegte Kolbenstange aufweist, die über eine Spindel-Mutter-Verbindung mit einer rotierenden Meßwelle (37) verbunden ist, die an dem KopierSteuerventil (36) mechanisch gekoppelt ist.

16. Vorrichtung nach Anspruch 11, dadurch gekennzeichnet, daß die Steuer-Regeleinrichtung (3, 4) eine hydraulische Sekundärregelung ist.

17. Vorrichtung nach einem der Ansprüche 1-10, dadurch gekennzeichnet, daß die Druckquelle (23 ; 59, 60) eine Hydraulikpumpe ist, die mit einer Steuer-Regeleinrichtung zusammenarbeitet.

18. Vorrichtung nach Anspruch 11, dadurch gekennzeichnet, daß die Steuer-Regeleinrichtung (3, 4) ein elektrohydraulisches Proportional- bzw. Servoventil ist.

19. Vorrichtung nach einem der Ansprüche 16-18, dadurch gekennzeichnet, daß zur Istwerterfassung des Hydraulikstromes ein volumetrisches Durchflußmeßgerät (5, 6 ; 27) mit elektrischem Ausgangssignal vorgesehen ist.

20. Vorrichtung nach einem der Ansprüche 16-18, dadurch gekennzeichnet, daß zur Hydraulikstromregelung jeweils zwischen dem Komponentenraum (12 bzw.13)/den Komponenträumen (51, 52 bzw. 53, 54) und der Mischkammer ein Massendurchflußmeßgerät mit einem elektrischen Ausgangssignal vorgesehen ist, das den Massenstrom der jeweiligen Komponente mißt, und daß das elektrische Ausgangssignal als Istwert für die Hydraulikstromregelung dient.

21. Vorrichtung nach einem der Ansprüche 11-18, dadurch gekennzeichnet, daß je Komponente jeweils zwischen dem Komponentenraum (12 bzw. 13)/den Komponenträumen (51, 52 bzw. 53, 54) und der Mischkammer ein Massendurchflußmeßgeät mit einem elektrischen Ausgangssignal vorgesehen ist, das den Massenstrom der jeweiligen Komponente mißt und den vorgewählten Sollwert der Hydraulikstromsteuerung entsprechend korrigiert.

22. Vorrichtung nach einem der Ansprüche 1-21, dadurch gekennzeichnet, daß je Komponente ein Verdrängerelement (1 bzw. 2) vorgesehen ist, das innerhalb eines Dosierhubes die erforderliche Dosiermenge dosieren kann.

23. Vorrichtung nach einem der Ansprüche 1-21, dadurch gekennzeichnet, daß je Komponente zwei Verdrängerelemente (47, 48 bzw. 49, 50) vorgesehen sind, die wechselseitig Dosier-und Füllhub ausführen, daß die Hubgeschwindigkeit beim Füllen größer als beim Dosieren ist und daß in den Hubendpunkten kurzzeitig beide Verdrängerelemente (47, 48 bzw. 49, 50) gleichzeitig dosieren.

## Claims

1. Device for metering at least two fluid reaction components into a mixing chamber with at least one container chamber for each component, with a displacement element (1, 2, 47, 48, 49, 50) in each container chamber, whereby in all the container chambers of at least one component the displacement element is designed as a flexible element which divides the relevant container chamber into a component chamber (12, 13, 51, 52, 53, 54) and a hydraulic chamber (16, 17, 55, 56, 57, 58) and which hermetically seals the component chamber from the hydraulic chamber, with a feed pipe for each component running from a component storage container to the component chamber/chambers, and with an outlet pipe for each component running from the component chamber/chambers to the mixing chamber, characterized in that with at least one component the hydraulic chamber (16 or 17) or chambers (55, 56 or 57, 58) possesses/possess a feed pipe (18 or 19) connected to a pressure source (23 ; 59 or 60) and an outlet (21 or 22) is provided running from the hydraulic chamber (16 or 17)/chambers (55, 56 or 57, 58) to a tank (20) and in that a control-regulation system (3 or 4) is provided for each component which determines a hydraulic flow which is pre-adjustable in its magnitude and duration and which hydraulically drives the displacement element (1 or 2)/elements (47, 48 or 49, 50).

2. Device in accordance with claim 1, characterized in that for each flexible displacement element (1, 2 ; 47, 48, 49, 50) an end position sensor (24, 25) is provided which acts in conjunction with the control-regulation system (3, 4).

3. Device in accordance with claim 2, characterized in that the end position sensor (24, 25) is an electric contact-free proximity switch.

4. Device in accordance with claim 2, characterized in that the end position sensor (24, 25) is an electric displacement pickup which is connected to the flexible displacement element (1, 2 ; 47, 48, 49, 50) on the side of the hydraulic chamber.

5. Device in accordance with one of the claims 1-4, characterized in that the flexible displacement element (1, 2 ; 47, 48, 49, 50) is a bellows made of metal or plastic.

6. Device in accordance with one of the claims 1-4, characterized in that the flexible displacement element (1, 2 ; 47, 48, 49, 50) is a membrane.

7. Device in accordance with claim 6, characterized in that the membrane consists of a PTFE-coated rubber elastic material.

8. Device in accordance with one of the claims 1-7, characterized in that in the container chamber/chambers (43, 44 or 45, 46) of at least one component, the displacement element (1, 2 ; 47, 48, 49, 50) is of a rigid design.

9. Device in accordance with one of the claims 1-8, characterized in that the flexible displacement element (1, 2 ; 47, 48, 49, 50) consists of at least two dividing walls beside one another.

10. Device in accordance with claim 9, characterized in that a film of fluid is present between each of the dividing walls and in that the space or spaces between the dividing walls are connected to the external surroundings of the container chamber (43, 44, 45, 46).

11. Device in accordance with one of the claims 1-10, characterized in that the control-regulation system (3, 4) is installed in the feed pipe (18, 19) running from the pressure source (23 ; 59, 60) to the hydraulic chamber (16, 17 ; 55, 56, 57, 58) with a closed control loop.

12. Device in accordance with claim 11, characterized in that the control-regulation system (3, 4) is an electro-hydraulic amplifier, whereby measurement of the actual value of the hydraulic flow is carried out in each case by a flow rate meter (5, 6 ; 27) with a rotating measuring shaft (37) which is mechanically coupled to a copying control valve (36) which is in turn connected to an electric control motor (42), whereby the rotating pre-specified movement of the control motor (42) (= target value) is copied in a manner true to the angle of rotation with the help of the copying control valve (36) to produce a rotating output movement of the measuring shaft (37) (= actual value) and whereby the absorption current of the flow rate meter (5, 6 ; 27) (= measured hydraulic flow) is in direct relation to the rotation produced by the flow rate meter (5, 6 ; 27).

13. Device in accordance with claim 12, characterized in that the flow rate meter (5, 6 ; 27) is a hydraulic stroke displacement motor which does not produce any external mechanical output and the output pressure of which, in accordance with its hydro-mechanical losses, is slightly smaller than the input pressure, in that the drive unit chamber (35) of the stroke displacement motor is constantly connected with its outlet (34) and in that the stroke displacement motor possesses a rotating motor shaft which is designed as a measuring shaft (37).

14. Device in accordance with claim 12, characterized in that the flow rate meter (5, 6 ; 27) is a hydraulic circulating displacement motor which possesses a rotating motor shaft which is designed as a measuring shaft (37).

15. Device in accordance with claim 12, characterized in that the flow rate meter (5, 6 ; 27) is a hydraulic linear motor with a piston rod moved in a translatory manner which is connected to a rotating measuring shaft (37) which is mechanically coupled with the copying control valve (36).

16. Device in accordance with claim 11, characterized in that the control-regulation system (3, 4) is a hydraulic secondary regulation.

17. Device in accordance with one of the claims 1-10, characterized in that the source of pressure (23 ; 59, 60) is a hydraulic pump which acts in conjunction with a control-regulation system.

18. Device in accordance with claim 11, characterized in that the control-regulation system (3, 4) is an electro-hydraulic proportional or servo valve.

19. Device in accordance with one of the claims 16-18. characterized in that a volumetric flow rate meter (5, 6 ; 27) with an electric output signal is provided for the measurement of the actual value of the hydraulic flow.

20. Device in accordance with one of the claims 16-18, characterized in that a mass flow rate meter with an electric output signal is provided for the regulation of the hydraulic flow between the component chamber (12 or 13)/chambers (51, 52 or 53, 54) and the mixing chamber respectively, which measures the mass flow of the respective components, and in that the electric output signal serves as the actual value for the regulation of the hydraulic flow.

21. Device in accordance with one of the claims 11-18, characterized in that a mass flow rate meter with an electric output signal is provided for each component between the component chamber (12 or 13)/chambers (51, 52 or 53, 54) and the mixing chamber, which measures the mass flow of the relevant component and correspondingly corrects the pre-selected target value of the hydraulic flow control.

22. Device in accordance with one of the claims 1-21, characterized in that a displacement element (1 or 2) is provided for each component which can dose the required amount within a metering stroke.

23. Device in accordance with one of the claims 1-21, characterized in that two displacement elements (47, 48 or 49, 50) are provided for each component, which alternately perform the metering and filling strokes, in that the stroke speed for filling is higher than that for metering and in that at the stroke end positions both displacement elements (47 ; 48 or 49 ; 50) dose at the same time for a brief moment.

## Revendications

1. Dispositif pour doser dans une chambre de mélange au moins deux constituants réactionnels coulants avec au moins une cuve pour chaque constituant, avec respectivement un élément de refoulement (1, 2, 47, 48, 49, 50) dans chaque cuve ; cet élément de refoulement qui divise la cuve correspondante en une chambre de constituant (12, 13, 51, 52, 53, 54) et une chambre hydraulique (16, 17, 55, 56, 57, 58), et qui isole de manière hermétique la chambre de mélange de la chambre hydraulique, étant constitué d'un matériau flexible dans toutes les cuves d'au moins un constituant ; équipé d'un conduit d'alimentation par constituant, lequel relie une cuve d'alimentation à la chambre de constituant/aux chambres de constituant ; équipé également d'un conduit d'évacuation par constituant, lequel relie la chambre de constituant/les cuves de constituant à la chambre de mélange, **caractérisé par le fait que** la chambre hydraulique (16 respectivement 17)/les chambres hydrauliques (55, 56, respectivement 57, 58) est munie/sont munies d'une alimentation (18 respectivement 19) partant d'une source de pression (23, 59, respectivement 60), et qu'il est prévu une évacuation (21, respectivement 22) à partir de la chambre hydraulique (16 respectivement 17)/à partir des chambres hydrauliques (55, 56, respectivement 57, 58) vers un réservoir (20) et un dispositif d'asservissement et de commande (3, respectivement 4) par constituant, lequel détermine un flux hydraulique dont on peut sélectionner la quantité et la durée de débit, lequel entraîne hydrauliquement l'élément de refoulement (1, respectivement 2)/les éléments de refoulement (47, 48 respectivement 49, 50).

2. Dispositif correspondant à la revendication n° 1, caractérisé par le fait qu'il est prévu respectivement un palpeur de fin de course (24, 25) pour les éléments de refoulement flexibles (1, 2 ; 47, 48, 49, 50), lequel interagit avec le dispositif d'asservissement et de commande (3, 4).

3. Dispositif correspondant à la revendication n° 2, caractérisé par le fait que le palpeur de fin de course (24, 25) est un commutateur d'approche sans contact.

4. Dispositif correspondant à la revendication n° 3 caractérisé par le fait que le palpeur de fin de course (24, 25) est un enregistreur de course qui est relié avec l'élément de refoulement flexible (1, 2 ; 47, 48, 49, 50) du côté de la chambre hydraulique.

5. Dispositifs correspondant aux revendications de 1 à 4, caractérisés par le fait que l'élément de refoulement flexible (1, 2 ; 47, 48, 49, 50) est un soufflet en métal ou en matière plastique.

6. Dispositifs correspondant aux revendications de 1 à 4, caractérisés par le fait que l'élément de refoulement flexible (1, 2 ; 47, 48, 49, 50) est une membrane.

7. Dispositif correspondant à la revendication n° 6, caractérisé par le fait que la membrane se compose d'un matériau en caoutchouc élastique recouvert d'une couche de PTFE.

8. Dispositif correspondant à une des revendications de 1 à 7, caractérisé par le fait que l'élément de refoulement (1, 2 ; 47, 48, 49, 50) dans la chambre de la cuve/les chambres des cuves (43, 44, respectivement 45, 46), est constitué de matériau rigide.

9. Dispositif correspondant à une des revendications de 1 à 8, caractérisé par le fait que l'élément de refoulement flexible (1, 2 ; 47, 48, 49, 50) est composé d'au moins deux parois de séparation superposées.

10. Dispositif correspondant à la revendication n° 9, caractérisé par le fait qu'il se trouve un film liquide entre les parois de séparation superposées et que le volume intermédiaire, respectivement les volumes intermédiaires situés entre les parois de séparation est/sont en relation avec l'environnement extérieur au volume de la cuve (43, 44, 45, 46).

11. Dispositif correspondant à une des revendications de 1 à 10, caractérisé par le fait que le dispositif d'asservissement et de commande (3, 4) vers l'alimentation (18, 19) est intégré à la source de pression (23 ; 59, 60) à la chambre hydraulique (16, 17, 55, 56, 57, 58) par un circuit de pilotage fermé.

12. Dispositif correspondant à la revendication n° 11, caractérisé par le fait que le dispositif d'asservissement et de commande (3, 4) est un amplificateur hydraulique dont la saisie de valeurs réelles du flux hydraulique s'effectue respectivement au moyen d'un débitmètre (5, 6 ; 27), lequel est muni d'un arbre rotatif de mesure (37) mécaniquement couplé à une vanne de pilotage à répétition d'action (36), elle-même reliée à un moteur électrique de commande (42) ; le mouvement rotatif de référence du moteur de commande (42) (= valeur de consigne) étant reproduit avec l'aide de la vanne de pilotage à répétition d'action (36) sous la forme d'un mouvement de sortie rotatif de l'arbre de mesure (37) (= valeur réelle) en respectant l'angle de rotation ; et le flux d'absorption du débitmètre (5, 6 ; 27) (= flux hydraulique mesuré) se trouve en rapport direct avec le mouvement rotatif produit par le débitmètre (5, 6 ; 27).

13. Dispositif correspondant à la revendication n° 12, caractérisé par le fait que le débitmètre (5, 6 ; 27) est un moteur hydraulique volumétrique à piston qui ne dispense aucune puissance mécanique vers l'extérieur et dont la pression initiale, en corrélation avec ses pertes hydromécaniques, est à peine plus faible que la pression d'entrée, et caractérisé par le fait que la chambre du mécanisme moteur (35) du moteur hydraulique volumétrique à piston est en permanence reliée à sa sortie (34) et que le moteur hydraulique volumétrique à piston dispose d'un arbre rotatif de moteur qui est conçu comme arbre de mesure (37).

14. Dispositif correspondant à la revendication n° 12, caractérisé par le fait que le débitmètre (5, 6 ; 27) est un moteur hydraulique volumétrique rotatif qui dispose d'un arbre rotatif de moteur conçu comme arbre de mesure (37).

15. Dispositif correspondant à la revendication n° 12, caractérisé par le fait que le débitmètre (5, 6 ; 27) est un moteur hydraulique volumétrique linéaire qui dispose d'une bielle mue par translation qui est reliée à un arbre rotatif (37) par l'intermédiaire d'une connexion tige-écrou et mécaniquement couplé à la vanne de pilotage à répétition d'action (36).

16. Dispositif correspondant à la revendication n° 11, caractérisé par le fait que le dispositif d'asservissement et de commande (3, 4) est une régulation secondaire hydraulique.

17. Dispositif correspondant à une des revendications 1 à 10, caractérisé par le fait que la source de pression (23 ; 59, 60) est une pompe hydraulique qui interagit avec un dispositif d'asservissement et de commande.

18. Dispositif correspondant à la revendication n° 11, caractérisé par le fait que le dispositif d'asservissement et de commande (3, 4) est une servo-vanne respectivement une vanne proportionnelle électro-hydraulique.

19. Dispositif correspondant à une des revendications 16 à 18, caractérisé par le fait qu'il est prévu pour la saisie de valeurs réelles du flux hydraulique un débitmètre volumétrique (5, 6 ; 27) avec signal de sortie électrique.

20. Dispositif correspondant à une des revendications 16 à 18, caractérisé par le fait qu'il est prévu pour la régulation du flux hydraulique respectivement entre la chambre de constituants (12, respectivement 13)/les chambres de constituants (51, 52 respectivement 53, 54) et la chambre de mélange, un débitmètre de masse avec un signal électrique de sortie qui mesure le courant de masse du composant respectif et caractérisé par le fait que le signal électrique de sortie sert de valeur réelle pour la regulation du flux hydraulique.

21. Dispositif correspondant à une des revendications 11 à 18, caractérisé par le fait qu'il est prévu respectivement entre la chambre de constituant (12, respectivement 13)/les chambres de constituant (51, 52 respectivement 53, 54) et la chambre de mélange un débitmètre de masse avec un signal de sortie électrique qui mesure le courant de masse des constituants respectifs et corrige en conséquence la valeur de consigne de la régulation hydraulique de courant.

22. Dispositif correspondant à une des revendications 1 à 21, caractérise par le fait qu'il est prévu par constituant un élément de refoulement (1 respectivement 2), lequel est susceptible de doser la quantité nécessaire en l'espace d'une seule course de piston.

23. Dispositif correspondant à une des revendications 1 à 21, caractérisé par le fait qu'il est prévu par constituant deux éléments de refoulement (47, 48, respectivement 49, 50) qui prennent en charge alternativement une course de dosage et une course de remplissage ; caractérisé par le fait que la vitesse de course est plus importante lors du remplissage que lors du dosage et qu'aux points de fin de course les deux éléments de refoulement (47, 48, respectivement 49, 50) dosent en même temps.

Fig. 1

Fig. 2

Fig. 3